(19) **Europäisches Patentamt / European Patent Office / Office européen des brevets**

(11) **EP 4 060 364 A1**

(12) # EUROPEAN PATENT APPLICATION

(43) Date of publication:
**21.09.2022 Bulletin 2022/38**

(21) Application number: **22152916.7**

(22) Date of filing: **24.01.2022**

(51) International Patent Classification (IPC):
*G01S 5/00* (2006.01)   *G01S 19/28* (2010.01)
*G01S 19/39* (2010.01)   *G01S 19/48* (2010.01)

(52) Cooperative Patent Classification (CPC):
**G01S 5/01; G01S 19/28; G01S 19/396; G01S 19/48**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.03.2021 JP 2021046427**

(71) Applicants:
- **KABUSHIKI KAISHA TOSHIBA**
  **Minato-ku**
  **Tokyo**
  **105-0023 (JP)**
- **Toshiba Infrastructure Systems & Solutions Corporation**
  **Kawasaki-shi, Kanagawa 212-0013 (JP)**

(72) Inventors:
- **Oodake, Tatsuya**
  **Kanagawa, 212-0013 (JP)**
- **Kobayashi, Hiroyuki**
  **Kanagawa, 212-0013 (JP)**
- **Seto, Naoto**
  **Kanagawa, 212-0013 (JP)**
- **Nameki, Hideaki**
  **Kanagawa, 212-0013 (JP)**
- **Kato, Noriyasu**
  **Kanagawa, 212-0013 (JP)**
- **Hattori, Yohei**
  **Kanagawa, 212-0013 (JP)**
- **Ito, Hiroaki**
  **Kanagawa, 212-0013 (JP)**

(74) Representative: **Hoffmann Eitle**
**Patent- und Rechtsanwälte PartmbB**
**Arabellastraße 30**
**81925 München (DE)**

(54) **POSITIONING DEVICE AND POSITIONING METHOD**

(57)    A positioning device (10) according to one embodiment is for measuring a position of a vehicle (11). In the positioning device (10), a satellite reception control unit (22) serves to perform first control related to reception of first information transmitted from one or more artificial satellites (12). The first information is used for measurement of the position of the vehicle. An independent measurement control unit (23) in the positioning device (10) serves to perform second control related to reception of second information transmitted from a sensor unit (CSU). The second information is used for measurement of the position of the vehicle. A switching determination unit (26) in the positioning device (10) serves to determine which of the first control and the second control is to be performed. The determination is executed on the basis of reception situations of the first information and the second information.

FIG.1

EP 4 060 364 A1

**Description**

FIELD

Embodiments described herein relate generally to a positioning device and a positioning method.

BACKGROUND

Measurement of positions of railroad vehicles have been performed by satellite reception control using radio wave signals transmitted from artificial satellites. However, measurement precision deteriorates up to ±10 m due to problems, such as multipath, depending on the environment of the railroad wayside. Due to such an influence, there is a case where the measurement precision is low as a method for measuring a position of a railroad vehicle by automatic driving in the satellite reception control. Moreover, radio waves transmitted from the satellites do not reach places in underpasses or underground sections, such as tunnels and station buildings on bridges. Thus, there is a possibility that a traveling position of a railroad vehicle cannot be detected in an area where the satellite reception control is impossible.
In order to solve such a problem, there is a need to improve measurement precision.

BRIEF DESCRIPTION OF THE DRAWINGS

FIG. 1 is a block diagram illustrating an outline of a positioning device according to an embodiment;
FIG. 2 is a block diagram illustrating a configuration of a reception operation processing device;
FIG. 3 is a flowchart illustrating processing of a positioning signal calculation unit;
FIG. 4 is a flowchart illustrating processing of an independent measurement calculation unit;
FIG. 5 is a conceptual view illustrating a situation in which a position of a railroad vehicle is measured;
FIG. 6 is a flowchart (Part 1) illustrating processing of a state determination unit;
FIG. 7 is a flowchart (Part 2) illustrating the processing of the state determination unit;
FIG. 8 is a flowchart illustrating a process of controlling an elevation angle of a satellite reception control unit;
FIG. 9 is a flowchart illustrating a process of controlling a reception sensitivity of a radio wave signal of the satellite reception control unit;
FIG. 10 is a flowchart illustrating processing of a switching determination unit;
FIGS. 11A to 11C are explanatory views of a situation in which an artificial satellite is selected by the satellite reception control unit;
FIGS. 12A and 12B are explanatory views of a situation in which the elevation angle is controlled by the satellite reception control unit;
FIG. 13 is an explanatory view illustrating a situation in which an artificial satellite arranged in an area is selected by the satellite reception control unit;
FIG. 14 is an explanatory view illustrating a situation in which a satellite reception control unit 22 selects an artificial satellite 12 on the basis of the order of priority of an area;
FIG. 15 is a flowchart illustrating a situation in which whether to execute independent measurement control is determined during execution of satellite reception control;
FIG. 16 is a conceptual view illustrating an error of a positioning point in satellite positioning control;
FIG. 17 is a flowchart illustrating a satellite selection process in the satellite reception control unit 22;
FIG. 18 is a conceptual view illustrating an estimated distance error in the satellite reception control;
FIG. 19 is a flowchart (Part 1) illustrating a processing flow of the satellite reception control;
FIG. 20 is a flowchart (Part 2) illustrating the processing flow of illustrating satellite reception control; and
FIG. 21 is an explanatory view illustrating an execution situation of map interlocking control.

DETAILED DESCRIPTION

A positioning device (10) according to one embodiment is for measuring a position of a vehicle (11). The positioning device includes a satellite reception control unit (22), an independent measurement control unit (23), and a switching determination unit (26). The satellite reception control unit (22) is configured to perform first control related to reception of first information (SX) transmitted from one or more artificial satellites (12). The first information is used for measurement of the position of the vehicle. The independent measurement control unit (23) is configured to perform second control related to reception of second information (DS) transmitted from a sensor unit (CSU). The second information is used for measurement of the position of the vehicle. The switching determination unit (26) is configured to determine which of the first control and the second control is to be performed. The determination is executed on the basis of reception situations of the first information and the second information.

Hereinafter, a positioning device and a positioning method according to embodiments will be described in detail with reference to the attached drawings.

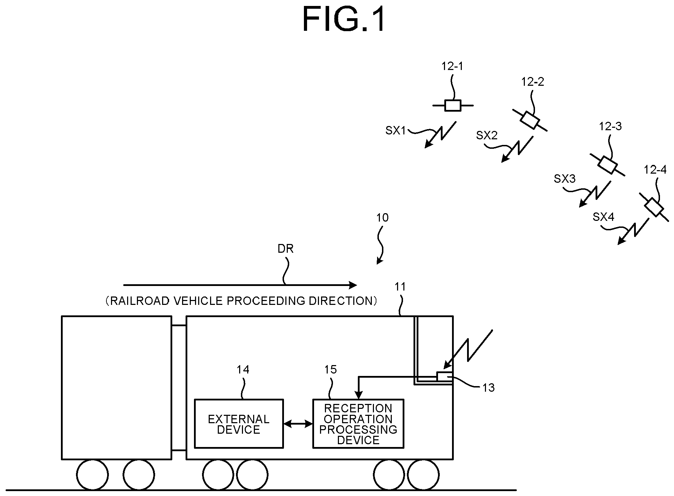

FIG. 1 is a block diagram illustrating an outline of a positioning device 10 according to an embodiment. The positioning device 10 is installed in a railroad vehicle 11 and capable of measuring a position of the railroad vehicle 11 on the basis of one or more radio wave signals SX transmitted from one or more artificial satellites 12. The positioning device 10 includes a receiving antenna device 13, an external device 14, and a reception operation processing device 15. Note that radio wave signals SX1 to SXn and artificial satellites 12-1 to 12-n are illustrated with "n = 4" in the present embodiment, but the present invention is not limited thereto. For example, "n" may be a natural number equal to or larger than five.

The receiving antenna device 13 is an antenna device capable of receiving the radio wave signal SX. The radio wave signal SX is a signal including information for measuring the position of the railroad vehicle 11. The external device 14 is a device that controls traveling of the railroad vehicle 11 on the basis of a positioning result. The external device 14 is, for example, a train control and management system (TCMS), a driver support control device for automatic driving, an on-board monitor, or the like. The reception operation processing device 15 performs calculation processing for determining the position of the railroad vehicle 11 on the basis of the radio wave signal SX output from the receiving antenna device 13. The reception operation processing device 15 then outputs a calculation result to the external device 14.

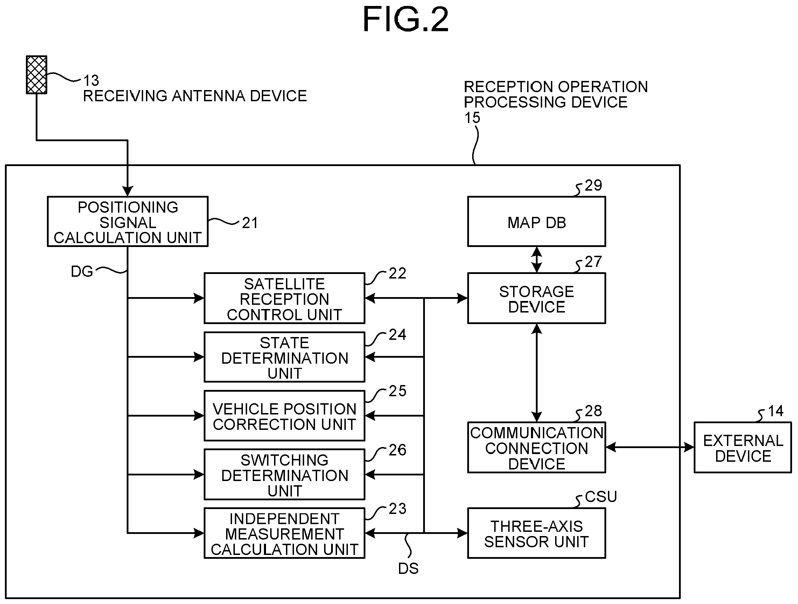

FIG. 2 is a block diagram illustrating a configuration of the reception operation processing device 15. The reception operation processing device 15 includes a positioning signal calculation unit 21, a satellite reception control unit 22, an independent measurement calculation unit 23, a state determination unit 24, a vehicle position correction unit 25, a switching determination unit 26, a storage device 27, a communication connection device 28, and a map DB 29. In FIG. 2, a three-axis sensor unit CSU is also illustrated. The three-axis sensor unit CSU is a sensor unit including, for example, a three-axis acceleration sensor, a three-axis gyro sensor, and a three-axis geomagnetic sensor.

The positioning signal calculation unit 21 calculates position coordinates of the railroad vehicle 11 on the basis of the radio wave signal SX received by the receiving antenna device 13, and outputs a satellite positioning data group DG. The satellite positioning data group DG includes information about the position coordinates of the railroad vehicle 11, time information, sanitary orbit information (for example, satellite almanac information and satellite ephemeris information) included in the radio wave signal SX, information about the strength of a reception signal of the radio wave signal SX, and the like.

The satellite reception control unit 22 performs satellite reception control using the radio wave signal SX transmitted from the artificial satellite 12 to measure the position of the railroad vehicle 11.

Specifically, the satellite reception control unit 22 calculates an elevation angle from a position of the artificial satellite 12 in a z-direction, on the basis of a proceeding direction DR and position coordinates (x, y, z) of the railroad vehicle 11.

Moreover, the satellite reception control unit 22 calculates an azimuth angle from the position of the artificial satellite 12 in xy-directions , on the basis of the proceeding direction DR and the position coordinates (x, y, z) of the railroad vehicle 11. Note that the satellite reception control unit 22 may calculate the elevation angle and the azimuth angle on the basis of the satellite almanac information.

Moreover, the satellite reception control unit 22 calculates a value of PDOP (a change rate of position precision estimated from a received signal). Dilution of precision (DOP) is an index of an arrangement state of a satellite, and has a high correlation with measurement precision of a position of an object. For example, a smaller value indicates a tendency of higher precision of measuring the position of the railroad vehicle 11. Examples of the DOP include horizontal DOP (HDOP) which is an index of a horizontal geometrical arrangement of a satellite, vertical DOP (VDOP) which is an index of a vertical geometrical arrangement of a satellite, and position DOP (PDOP) combining the both. In the present embodiment, the PDOP value is typically used.

Moreover, the satellite reception control unit 22 calculates a value of PACC 3D. PACC is an index indicating the measurement precision of the position of the railroad vehicle 11 and the signal strength of the radio wave signal SX transmitted from the artificial satellite 12. For example, a smaller value indicates a tendency that the precision of measuring the position of the railroad vehicle 11 is higher and the signal strength of the radio wave signal SX is higher. Examples of PACC include PACCH which is an index of horizontal position precision of a railroad vehicle, PACCV which is an index of vertical position precision of a railroad vehicle, and PACC 3D which is an index of position precision of a railroad vehicle in directions of three axes (xyz). In the present embodiment, the PACC 3D value is typically used.

The independent measurement calculation unit 23 (an example of the independent measurement control unit) outputs an independent positioning data group DS on the basis of the output of the three-axis sensor unit CSU. The independent positioning data group DS includes time, a speed, an acceleration, an angle, a travel vector, and the like. That is, the independent measurement calculation unit 23 calculates these using general calculation methods to execute independent measurement control for measuring the position of the railroad vehicle 11. For example, the travel vector in the three-axis direction is calculated by integrating the acceleration in the three-axis direction over time on the basis of the output of the three-axis acceleration sensor. Moreover, the speed can be calculated as, for example, an absolute value of the travel vector in the three-axis direction. In other words, the independent measurement calculation unit 23 performs the independent measurement control related to reception of the information transmitted from the sensor for measurement of the position of the railroad vehicle 11.

Moreover, the independent measurement calculation unit 23 performs a correction calculation on position coordinates of the railroad vehicle 11 based on the satellite positioning data group DG by using the information of the independent positioning data group DS, and outputs position information of the railroad vehicle 11. That is, the independent measurement calculation unit 23 calculates a time-series change of the position coordinates of the railroad vehicle 11 from a reference position, by using the information of the independent positioning data group DS.

The independent measurement calculation unit 23 calculates the speed, the acceleration, and the angle in the three-axis direction and outputs the independent positioning data group DS including these pieces of information to be stored in the storage device 27 together with the time. At this time, the independent measurement calculation unit 23 calculates the position coordinates of the railroad vehicle 11 on the basis of the independent positioning data group DS and stores the position coordinates in the storage device 27 together with the time.

The state determination unit 24 determines a state of the railroad vehicle 11 (for example, whether the railroad vehicle 11 is in a traveling state, a stopped state, a faulty state, or the like) on the basis of, for example, the satellite positioning data group DG and the independent positioning data group DS.

The vehicle position correction unit 25 calculates a time-series change of the position coordinates of the railroad vehicle 11 from a reference position using at least the information included in the satellite positioning data group DG or the information included in the independent positioning data group DS. This reference position is an average position of positions that have been measured in the past or calculated independently. For example, the reference position is an average value of past ten measured positions at the time of passing through the same ground element.

The switching determination unit 26 determines which of the satellite reception control and the independent measurement control should be performed. This determination is executed on the basis of a reception situation of the information transmitted from the artificial satellite for measurement of the position of the vehicle and the information transmitted from the sensor for measurement of the position of the vehicle.

Moreover, the switching determination unit 26 determines which of the position coordinates measured by the satellite reception control unit 22 with the satellite reception control (an example of the first control) and the position coordinates output by the independent measurement calculation unit 23 with the independent measurement control (an example of the second control) is to be set as the position coordinates of the railroad vehicle 11.

For example, the switching determination unit 26 determines whether the radio wave signal SX is blocked and the railroad vehicle 11 exists in an environment where it is difficult to capture the artificial satellite 12. In response to determining that the railroad vehicle 11 exists in such an environment and thereby the satellite reception control unit 22 cannot perform the satellite reception control, the independent measurement calculation unit 23 executes the independent measurement control to measure the position of the railroad vehicle 11.

The storage device 27 is implemented using, for example, a random access memory (RAM), a semiconductor memory element such as a flash memory, a hard disk, an optical disk, and the like. The storage device 27 stores various types of information. The communication connection device 28 performs communication between the storage device 27 and the external device 14.

The map DB 29 (an example of a map information storage unit) stores map information indicating, for example, a specific area, such as a tunnel, a station building, and a bridge, where the reception situation of the radio wave signal SX transmitted from the artificial satellite 12 deteriorates on a map, an entrance and an exit of the area, and the like. Then, for example, the satellite reception control unit 22 or the independent measurement calculation unit 23 performs map interlocking control that is control for performing the satellite reception control or the independent measurement control in parallel while referring to the map information stored in the map DB 29. Note that the satellite reception control unit 22 and the independent measurement calculation unit 23 may execute the map interlocking control while executing the satellite reception control and the independent measurement control, respectively.

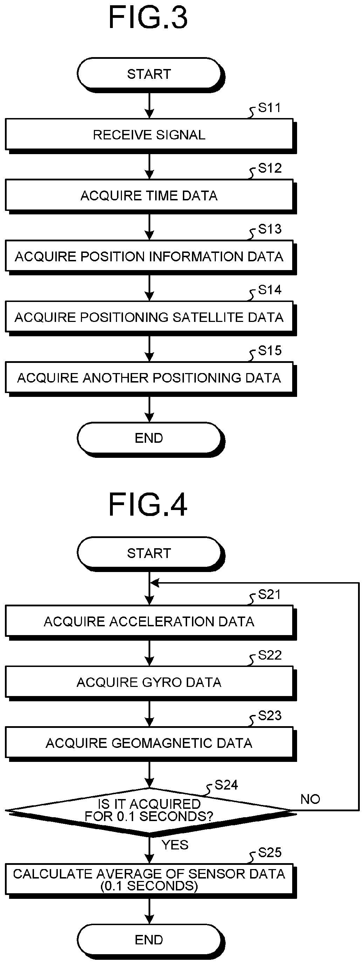

FIG. 3 is a flowchart of processing of the positioning signal calculation unit 21. The positioning signal calculation unit 21 receives the radio wave signals SX1 to SX4 via the receiving antenna device 13 (Step S11).

Next, the positioning signal calculation unit 21 extracts a time signal from the radio wave signals SX1 to SX4 and acquires data related to the time information (Step S12). Subsequently, the positioning signal calculation unit 21 acquires data regarding position information including latitude information and longitude information on the basis of satellite orbit information (for example, satellite almanac information and satellite ephemeris information) and the acquired time signal (Step S13).

Details of a method for acquiring the position information will be described. The positioning signal calculation unit 21 calculates position coordinates (x, y, z) of the railroad vehicle 11 using, for example, the orbit information from the artificial satellites 12-1 to 12-4. That is, the position coordinates (x, y, z) of the railroad vehicle 11 are calculated on the basis of sets of pieces of information on positions of the artificial satellites 12-1 to 12-4 and distances of the artificial satellites 12-1 to 12-4 from the reception operation processing device 15 at the moment. In this case, the coordinates (x, y, z) can be calculated if there are three or more sets of pieces of information on positions of artificial satellites and distances of the artificial satellites from the reception operation processing device 15 at the moment. In addition, the fourth satellite is generally required to ensure time precision.

More specifically, the positioning signal calculation unit 21 calculates the position coordinates (x, y, z) of the railroad vehicle 11 using the following formula on the basis of the sanitary orbit information (for example, satellite almanac information and satellite ephemeris information) and the acquired time signal.

$$\begin{cases} \sqrt{(x - x_1)^2 + (y - y_1)^2 + (z - z_1)^2} - c(t - t_1) = 0 \\ \sqrt{(x - x_2)^2 + (y - y_2)^2 + (z - z_2)^2} - c(t - t_2) = 0 \\ \sqrt{(x - x_3)^2 + (y - y_3)^2 + (z - z_3)^2} - c(t - t_3) = 0 \\ \sqrt{(x - x_4)^2 + (y - y_4)^2 + (z - z_4)^2} - c(t - t_4) = 0 \end{cases}$$

In the above formula, (x, y, z) is a parameter of a coordinate value of a position to be obtained, and $(x_n, y_n, z_n)$ is a parameter of a coordinate value of a position of the artificial satellite 12 that transmits the radio wave signal SX. Moreover, t is a parameter of the time of positioning, and $t_n$ is a parameter of the time when the artificial satellite 12 has transmitted the radio wave signal SX. Note that the positioning signal calculation unit 21 may receive the radio wave signal SX via a base station on the ground or the like. The positioning signal calculation unit 21 calculates the position information to be detected by the least-squares method or the like for these four parameters.

Subsequently, the positioning signal calculation unit 21 acquires data regarding the artificial satellite 12 that measures the position of the railroad vehicle 11 (Step S14). For example, the positioning signal calculation unit 21 acquires the number of the artificial satellites 12 used for measurement on the basis of predetermined calculation.

Moreover, the positioning signal calculation unit 21 acquires other data (Step S15). The positioning signal calculation unit 21 outputs the satellite positioning data group DG including these pieces of information to be stored in the storage device 27.

FIG. 4 is a flowchart illustrating processing of the independent measurement calculation unit 23. The independent measurement calculation unit 23 acquires data of the three-axis acceleration sensor from the three-axis sensor unit CSU (Step S21), data of the three-axis gyro sensor (Step S22), and data of the three-axis geomagnetic sensor (Step S23). Note that it is not always necessary to acquire the data of the three-axis geomagnetic sensor, and only the two types of data, that is, the three-axis acceleration sensor and the three-axis gyro sensor, may be acquired.

Next, the independent measurement calculation unit 23 determines whether the data of each of the sensors has been acquired for 0.1 seconds. In response to determining that the data for 0.1 seconds has not been acquired (No in Step S24), the processing is repeated returning to Step S21. In response to determining that the data for 0.1 seconds has been acquired (Yes in Step S24), an average value of the data of each of the sensors is calculated (Step S25), and the processing is ended.

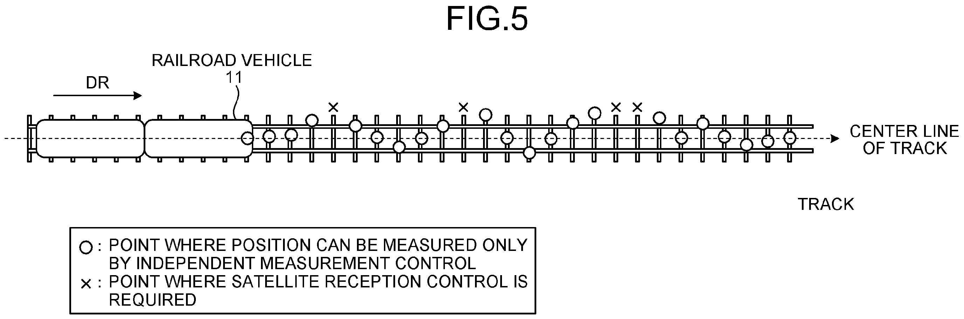

FIG. 5 is a conceptual view illustrating a situation in which a position of the railroad vehicle 11 is measured. For example, when the independent measurement calculation unit 23 calculates that the railroad vehicle 11 is located at a position indicated by a mark "O" on a track, the switching determination unit 26 determines that the position of the railroad vehicle 11 can be measured only by the independent measurement control. On the other hand, when the independent measurement calculation unit 23 calculates that the railroad vehicle 11 is located at a position indicated by a mark "x" on the track, the switching determination unit 26 determines that it is necessary to measure the position of the railroad vehicle 11 by performing the satellite reception control instead of the independent measurement control or in parallel with the independent measurement control.

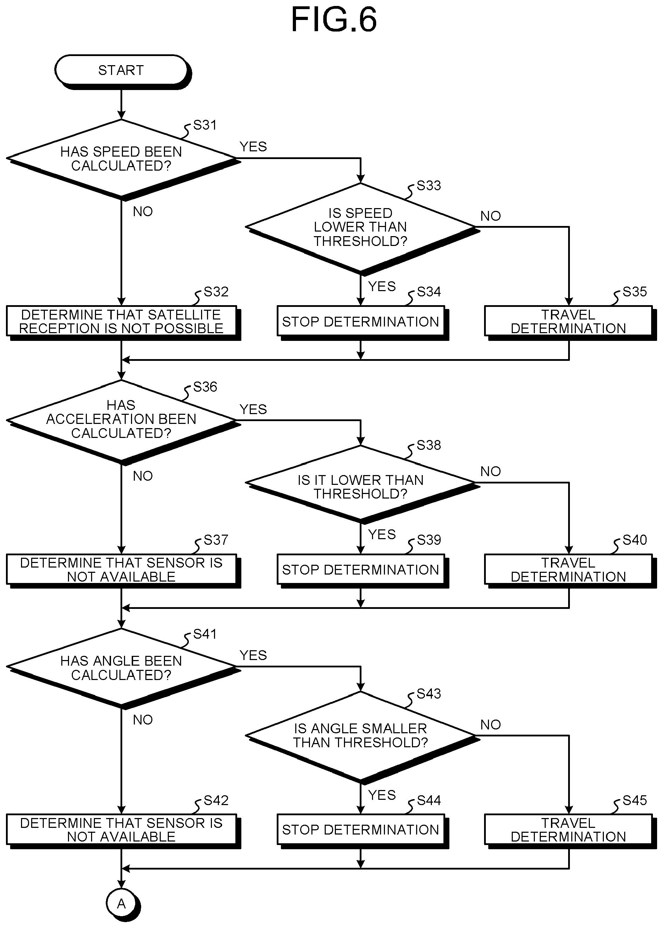

FIG. 6 is a flowchart (Part 1) illustrating processing of the state determination unit. The state determination unit 24 determines whether the positioning signal calculation unit 21 has calculated the speed of the railroad vehicle 11 on the basis of the radio wave signal SX received from the artificial satellite 12 (Step S31). In response to determining that the positioning signal calculation unit 21 has not calculated the speed (No in Step S31), the state determination unit 24 determines that reception of the radio wave signal SX from the artificial satellite 12 is not possible (Step S32), and proceeds to Step S36. If the positioning signal calculation unit 21 determines that the speed has been calculated (Yes in Step S31), the state determination unit 24 determines whether the speed of the railroad vehicle 11 is lower than a threshold (Step S33). If the speed is lower than the threshold (Yes in Step S33), the state determination unit 24 determines that the railroad vehicle 11 is stopped (Step S34), and proceeds to Step S36. If the speed is not lower than the threshold (Yes in Step S33), the state determination unit 24 determines that the railroad vehicle 11 is traveling (Step S35), and proceeds to Step S36.

Next, the state determination unit 24 determines whether the independent measurement calculation unit 23 has calculated the acceleration (Step S36). In response to determining that the acceleration has not been calculated (No in Step S36), the state determination unit 24 determines that the acceleration sensor is not available (Step S37), and proceeds to Step S41. In response to determining that the acceleration has been calculated (Yes in Step S36), the state determination unit 24 determines whether the acceleration of the railroad vehicle 11 is lower than a threshold (Step S38). If the acceleration is lower than the threshold (Yes in Step S38), the state determination unit 24 determines that the railroad vehicle 11 is stopped (Step S39), and proceeds to Step S41. If the acceleration is not lower than the threshold (No in Step S38), the state determination unit 24 determines that the railroad vehicle 11 is traveling (Step S40), and proceeds to Step S41.

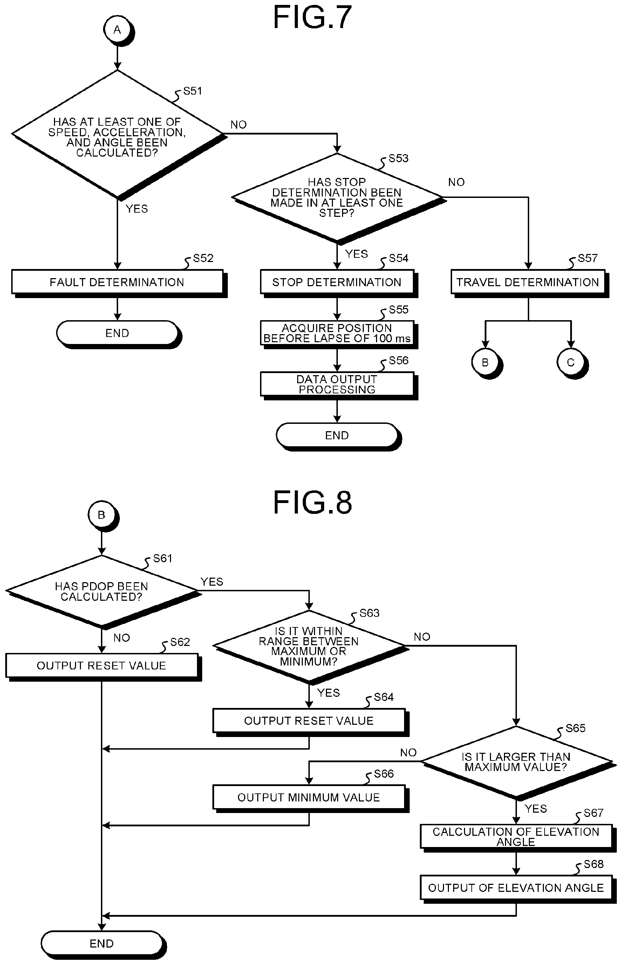

Subsequently, the state determination unit 24 determines whether the independent measurement calculation unit 23 has calculated the angle (Step S41). In response to determining that the angle has not been calculated (No in Step S41), the state determination unit 24 determines that the angle sensor is not available (Step S42), and proceeds to Step S51. In response to determining that the angle has been calculated (Yes in Step S41), the state determination unit 24 determines whether the angle of the railroad vehicle 11 is smaller than a threshold (Step S43). In response to determining that the angle is smaller than the threshold (Yes in Step S43), the state determination unit 24 determines that the railroad vehicle 11 is stopped (Step S44), and proceeds to Step S51. If the angle is not smaller than the threshold (No in Step S43), the state determination unit 24 determines that the railroad vehicle 11 is traveling (Step S45), and proceeds to Step S51 (which is followed by A in FIG. 7).

FIG. 7 is a flowchart (Part 2) illustrating the processing of the state determination unit. The state determination unit 24 determines whether at least one of the speed, the acceleration, and the angle has been calculated (Step S51). In response to determining that at least one of the speed, the acceleration, and the angle has not been calculated (Yes in Step S51), the state determination unit 24 determines that the railroad vehicle 11 is faulty (Step S52), and ends the processing.

In response to determining that at least one of the speed, the acceleration, and the angle has been calculated (No in Step S51), the state determination unit 24 determines whether the stop determination has been made at least once (Step S53). That is, the state determination unit 24 determines whether the vehicle is in the stopped state where the vehicle is stopped or in the traveling state where the vehicle is traveling. In response to determining that the stop determination has been made at least once (Yes in Step S53), the state determination unit 24, the state determination unit 24 determines that the railroad vehicle 11 is stopped (Step S54). Thereafter, the state determination unit 24 acquires a position of the railroad vehicle 11 before a lapse of 100 ms (Step S55), outputs data indicating that the vehicle is stopped (Step S56), and ends the processing.

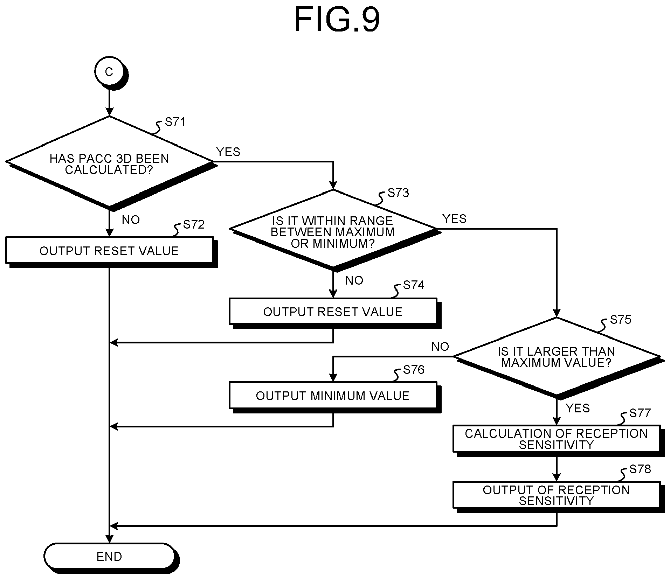

In response to determining that the stop determination has not been made at least once (No in Step S53), the state determination unit 24 determines that the railroad vehicle 11 is traveling (Step S57), and proceeds to Step S61 and Step S71 (which is followed by B in FIG. 8 and C in FIG. 9).

FIG. 8 is a flowchart illustrating a process of controlling an elevation angle of the satellite reception control unit 22. The state determination unit 24 determines whether the satellite reception control unit 22 has calculated PDOP (Step S61). In response to determining that the satellite reception control unit 22 has not calculated the PDOP (No in Step S61), the satellite reception control unit 22 outputs a reset value of the elevation angle (an angle) (Step S62), and the processing is ended.

In response to determining that the satellite reception control unit 22 has calculated the PDOP (a position precision reduction rate) (Yes in Step S61), the state determination unit 24 determines whether the PDOP is within a range between the minimum value and the maximum value (Step S63). In response to determining that the PDOP is within the range between the minimum value and the maximum value (Yes in Step S63), a reset value of the elevation angle is output (Step S64), and the processing is ended.

In response to determining that the PDOP is not within the range between the minimum value and the maximum value (No in Step S63), the state determination unit 24 determines whether the PDOP is larger than the maximum value (Step S65). In response to determining that the PDOP is not larger than the maximum value (No in Step S65), the satellite reception control unit 22 outputs the minimum value of the PDOP (Step S66), and ends the processing. In response to determining that the PDOP is larger than the maximum value (Yes in Step S65), the satellite reception control unit 22 calculates the elevation angle (Step S67). Then, the satellite reception control unit 22 outputs the elevation angle (Step S68), and ends the processing.

FIG. 9 is a flowchart illustrating a process of controlling a reception sensitivity of the radio wave signal SX of the satellite reception control unit 22. The state determination unit 24 determines whether the satellite reception control unit 22 has calculated PACC 3D (Step S71). In response to determining that the satellite reception control unit 22 has not calculated the PACC 3D (No in Step S71), the satellite reception control unit 22 outputs a reset value of the reception sensitivity (Step S72), and the processing is ended.

In response to determining that the satellite reception control unit 22 has calculated the PACC 3D (Yes in Step S71), the state determination unit 24 determines whether the PACC 3D is within a range between the predetermined minimum and maximum values (Step S73). In response to determining that the PACC 3D is not within the range between the predetermined minimum and maximum values (No in Step S73), the satellite reception control unit 22 outputs a reset value of the reception sensitivity (Step S74), and the processing is ended.

In response to determining that the PACC 3D is within the range between the predetermined minimum and maximum values (Yes in Step S73), the state determination unit 24 determines whether the PACC 3D is larger than the predetermined maximum value (Step S75). In response to determining that the PACC 3D is not larger than the predetermined maximum value (No in Step S75), the satellite reception control unit 22 outputs the minimum value of the PACC 3D (Step S76), and ends the processing. In response to determining that the PACC 3D is larger than the maximum value (Yes in Step S75), the satellite reception control unit 22 calculates the reception sensitivity (Step S77). Then, the satellite reception control unit 22 outputs the reception sensitivity (Step S78), and ends the processing.

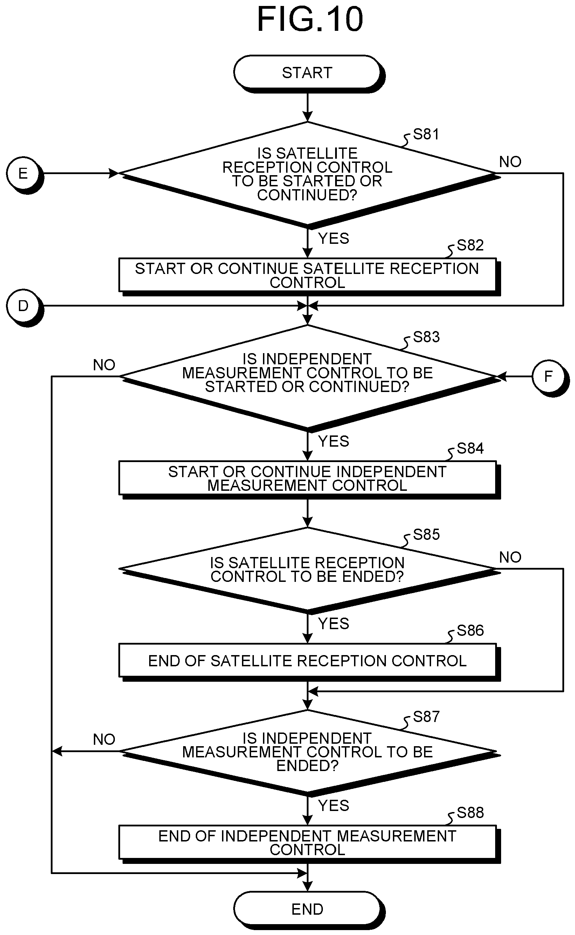

FIG. 10 is a flowchart illustrating processing of the switching determination unit 26. The switching determination unit 26 determines whether it is a situation in which the satellite reception control unit 22 is to start or continue the satellite reception control (Step S81). In response to determining that it is the situation to start or continue the satellite reception control (Yes in Step S81), the satellite reception control unit 22 starts the satellite reception control (Step S82), and proceeds to Step S83.

In response to determining that it is not the situation to start or continue the satellite reception control (No in Step S81) or after the processing in Step S82, the switching determination unit 26 determines whether it is a situation in which the independent measurement calculation unit 23 is to start or continue the independent measurement control (Step S83). In response to determining that it is not the situation in which the independent measurement calculation unit 23 is to start or continue the independent measurement control (No in Step S83), the switching determination unit 26 ends the processing. In response to determining that it is the situation to start or continue the independent measurement control (Yes in Step S83), the independent measurement calculation unit 23 starts the independent measurement control (Step S84).

Thereafter, the switching determination unit 26 determines whether it is a situation in which the satellite reception control unit 22 is to end the satellite reception control (Step S85). In response to determining that it is the situation to end the satellite reception control (Yes in Step S85), the satellite reception control unit 22 ends the satellite reception control (Step S86).

The switching determination unit 26 determines whether it is a situation in which the independent measurement calculation unit 23 is to end the independent measurement control (Step S87). In response to determining that it is the situation to end the independent measurement control (Yes in Step S87), the independent measurement calculation unit 23 ends the independent measurement control (Step S88), and the switching determination unit 26 ends the processing. In response to determining that it is the situation not to end the independent measurement control (No in Step S87), the switching determination unit 26 ends the processing.

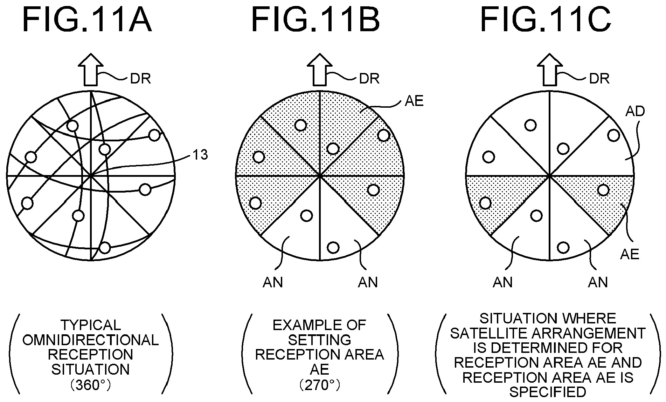

FIGS. 11A to 11C are explanatory views of a situation in which an artificial satellite is selected by the satellite reception control unit 22. FIG. 11A is an image view of satellite orbit information. In FIG. 11A, the antenna 13 of the railroad vehicle 11 is arranged at the center of a circle. In FIG. 11A, a mark "O" indicates a current position of the artificial satellite 12, and a curve passing through the current position of the artificial satellite 12 indicates the satellite orbit information of the artificial satellite 12.

In the situation as illustrated in FIG. 11A, a range that can be actually received by the antenna 13 of the railroad vehicle 11 differs depending on an arrangement position of the antenna 13 and a traveling position of the railroad vehicle 11. For example, as illustrated in FIG. 11B, the satellite reception control unit 22 sets a reception-effective area AE and a reception-ineffective area AN. An azimuth angle is set on the basis of the proceeding direction DR of the railroad vehicle 11 so as to be, for example, 135 degrees in each of the clockwise direction and the counterclockwise direction with respect to the proceeding direction DR.

Moreover, the satellite reception control unit 22 continuously performs a process of setting a satellite arrangement determination area AD for determining an artificial satellite position to select the artificial satellite 12 so as to have 90 degrees in each of the clockwise direction and the counterclockwise direction with respect to the proceeding direction DR of the railroad vehicle 11, as illustrated in FIG. 11C, for the reception-effective area AE corresponding to the set azimuth angle, and continuously performs a process of determining an artificial satellite to be selected next time.

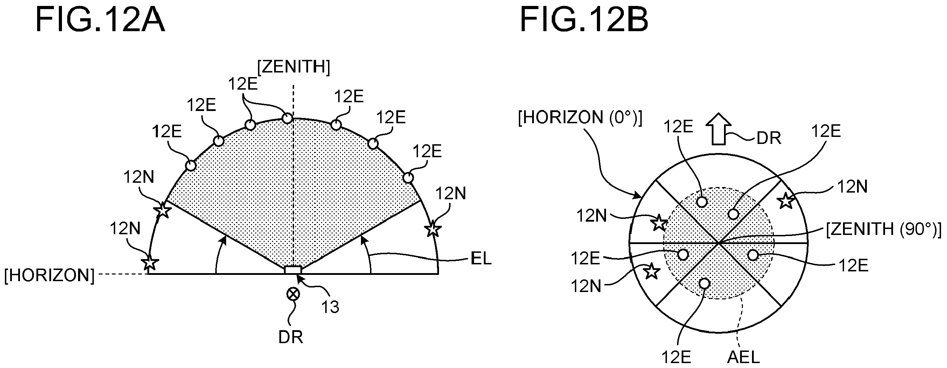

FIGS. 12A and 12B are explanatory views of a situation in which the elevation angle is controlled by the satellite reception control unit 22. As illustrated in FIG. 12A, the satellite reception control unit 22 controls an elevation angle EL so as to include all artificial satellites 12E, which have been selected by the above-described artificial satellite selection process and are effective in the measurement of the position of the railroad vehicle 11, and so as not to include artificial satellites 12N (= an artificial satellite 12N21 and an artificial satellite 12N22) which are ineffective in the measurement of the position of the railroad vehicle 11.

As a result, an effective elevation angle range AEL is obtained as illustrated in FIG. 12B, and thus, the satellite reception control unit 22 also performs a process of specifying the reception-effective area AE of the railroad vehicle 11

as illustrated in FIG. 11C. As a result, it is possible to maintain the measurement precision of the position of the railroad vehicle 11 at a desired value or more.

That is, the satellite reception control unit 22 sets the range of the elevation angle of the artificial satellite with respect to the vehicle, sets a range of the azimuth angle formed by the artificial satellite with respect to the vehicle within the set elevation angle range, and divides, into multiple division areas, each area included in the elevation angle range and the azimuth angle range.

In this case, the satellite reception control unit 22 periodically acquires the proceeding direction DR of the railroad vehicle 11 from the azimuth angle for a certain period of time (for example, one second), and acquires an averaged azimuth angle as a proceeding direction angle. The artificial satellite 12 existing in this proceeding direction angle may be selected from the satellite orbit information.

Moreover, when the azimuth angle of the proceeding direction DR has changed significantly (for example, by 10°) due to a curve, a route change, or the like, the satellite reception control unit 22 acquires the proceeding direction angle at any time to select the artificial satellite 12 from the satellite orbit information. As a result, the satellite reception control unit 22 can select only the radio wave signal SX that can improve the precision of detecting the position of the railroad vehicle 11.

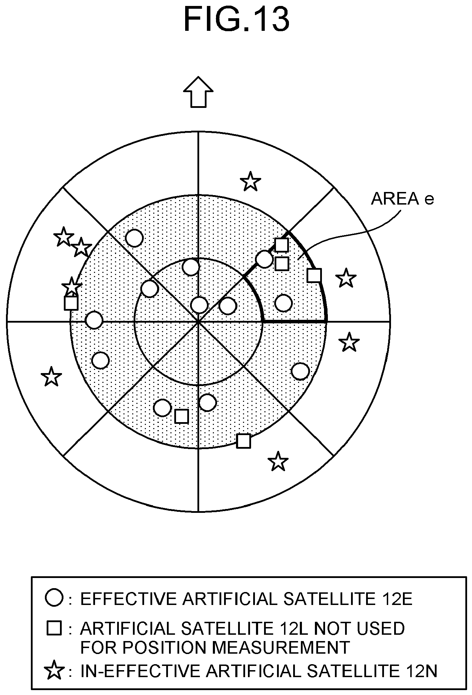

FIG. 13 is an explanatory view illustrating a situation in which the artificial satellite 12 arranged in an area is selected by the satellite reception control unit 22. Five artificial satellites 12 are arranged in an area e that is included in the effective elevation angle range AEL and is surrounded by a thick line. The satellite reception control unit 22 sorts these five artificial satellites 12 between two effective artificial satellites 12E and three artificial satellites 12L that are not used for position measurement, depending on an arrangement situation of the artificial satellites 12 inside the area e, for example. That is, the satellite reception control unit 22 selects the artificial satellite 12 to be used for the satellite reception control from the one or more artificial satellites 12 arranged in the division areas.

At this time, the satellite reception control unit 22 selects two out of the five artificial satellites 12 as the effective artificial satellites 12E such that the effective artificial satellites 12E are evenly arranged in the area e. Moreover, for example, the satellite reception control unit 22 selects the artificial satellites 12 whose distances are close to or overlap each other in the area e as the artificial satellites 12L that are not used for position measurement. The satellite reception control unit 22 performs the same processing in the other areas in accordance with an arrangement situation of the artificial satellites 12. Note that the satellite reception control unit 22 may preferentially select a geostationary satellite in a case where the artificial satellites 12 include the geostationary satellite.

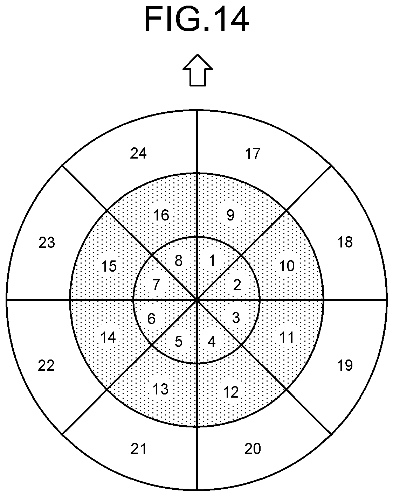

FIG. 14 is an explanatory view illustrating a situation in which the satellite reception control unit 22 selects the artificial satellite 12 on the basis of the order of priority of an area. The satellite reception control unit 22 sets the order of priority (for example, the order from 1 to 24 as illustrated in FIG. 14) in each of the areas on the basis of the elevation angle, the azimuth angle, and the reception sensitivity. For example, the satellite reception control unit 22 preferentially selects the artificial satellite 12 arranged in an area having a high priority. That is, the satellite reception control unit 22 selects areas on the basis of the predetermined order of priority. In a case where the areas include a geostationary satellite, the satellite reception control unit 22 may preferentially select an area including the geostationary satellite. Note that the elevation angle is set basically with an increment of 15° or 30°, and the azimuth angle is set basically with an increment of 30° or 45° in FIGS. 13 and 14, but the present invention is not limited to the angles illustrated herein.

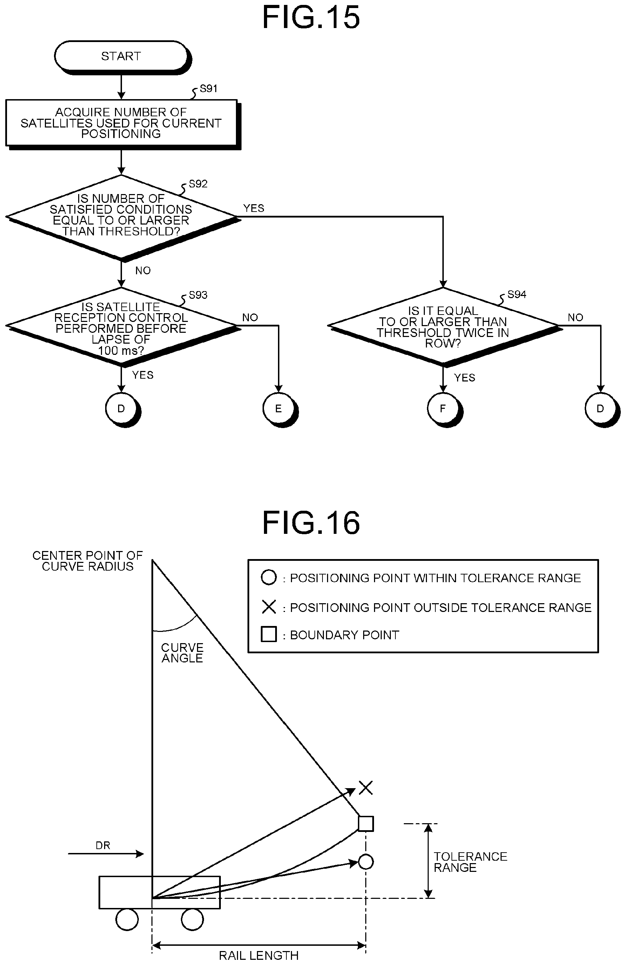

FIG. 15 is a flowchart illustrating a situation in which whether to execute the independent measurement control is determined during execution of the satellite reception control. First, the satellite reception control unit 22 acquires the number of satellites which have been used to measure a current position of the railroad vehicle 11 (Step S91). Next, the state determination unit 24 determines whether the number of satisfied conditions is equal to or larger than a predetermined threshold (Step S92). In response to determining that the number is not equal to or larger than the threshold (No in Step S92), the state determination unit 24 determines whether the satellite reception control unit 22 has performed the satellite reception control before a lapse of a predetermined time (for example, 100 ms) (Step S93).

In response to determining that the satellite reception control has been performed before the lapse of the predetermined time (Yes in Step S93), the processing proceeds to D in FIG. 10, and the switching determination unit 26 continues the processing. In response to determining that the satellite reception control has not been performed before the lapse of the predetermined time (No in Step S93), the processing proceeds to E in FIG. 10, and the switching determination unit 26 continues the processing.

In response to determining in Step S92 that the number is equal to or larger than the threshold (Yes in Step S92), the state determination unit 24 determines whether the number is equal to or larger than the threshold twice in a row (Step S94). In response to determining that the number is equal to or larger than the threshold twice in a row (Yes in Step S94), the processing proceeds to F in FIG. 10, and the switching determination unit 26 continues the processing. In response to determining that the number of times the number is equal to or larger than the threshold is not twice in a row (No in Step S94), the processing proceeds to D in FIG. 10, and the switching determination unit 26 continues the processing.

FIG. 16 is a conceptual view illustrating an error of a positioning point in the satellite positioning control. In FIG.

16, a range between a central axis that passes through the center of gravity (the vicinity of the center of gravity) of the railroad vehicle 11 and extends along the proceeding direction DR of the railroad vehicle 11 and a mark " □" located on an arc centered on a center point, which is a point on a perpendicular line that passes through the center of gravity of the railroad vehicle 11 and is perpendicular to the central axis, is illustrated as a tolerance range. Then, in FIG. 16, a mark "O" is located within the tolerance range, and a mark "x" is located outside the tolerance range.

For example, when the state determination unit 24 determines that a measurement point is included in the tolerance range the number of times equal to or more than a predetermined threshold during execution of the satellite positioning control, the switching determination unit 26 determines that the satellite reception control unit 22 is in the situation to perform the satellite positioning control, and the satellite reception control unit 22 continues the satellite positioning control. When the state determination unit 24 determines that the positioning point is not included in the tolerance range the number of times equal to or more than the predetermined threshold during the execution of the satellite positioning control, the switching determination unit 26 determines that it is the situation to perform the independent measurement control, and the independent measurement calculation unit 23 starts the independent measurement control.

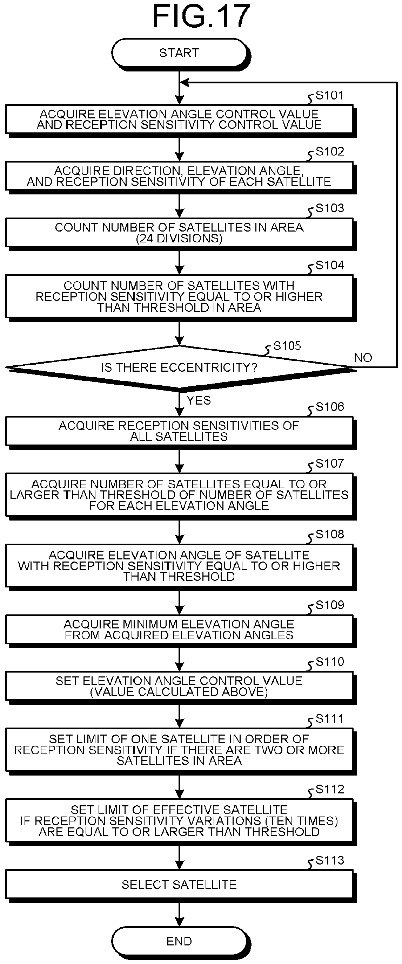

FIG. 17 is a flowchart illustrating a satellite selection process in the satellite reception control unit 22. The satellite reception control unit 22 acquires a control value of a target elevation angle and a control value of a target reception sensitivity (Step S101). Next, the satellite reception control unit 22 acquires the direction, the elevation angle, and the reception sensitivity of each of the artificial satellites 12 (Step S 102). Then, the satellite reception control unit 22 counts the number of all the artificial satellites 12 in the area (Step S 103). Thereafter, the satellite reception control unit 22 counts, for each of the division areas, the number of the artificial satellites 12 each having the reception sensitivity equal to or higher than a threshold (Step S104).

The satellite reception control unit 22 determines whether there is eccentricity in the arrangement of artificial satellites in the area (Step S 105). If there is no eccentricity (No in Step S 105), the processing is repeated returning to Step S101. If there is eccentricity (Yes in Step S 105), the satellite reception control unit 22 acquires the reception sensitivities of all the artificial satellites 12 (Step S106).

Next, the satellite reception control unit 22 acquires the number of satellites each having the reception sensitivity equal to or higher than the threshold for each elevation angle (Step S 107). Next, the satellite reception control unit 22 acquires the elevation angles of the artificial satellites 12 each having the reception sensitivity equal to or higher than the threshold (Step S108). Next, the satellite reception control unit 22 calculates the minimum elevation angle from the acquired elevation angles (Step S109), and sets this value as the elevation angle control value (Step S110).

When there are two or more artificial satellites 12 in each of the division areas, the satellite reception control unit 22 selects one artificial satellite 12 having the best reception situation (reception sensitivity) (Step S111). The satellite reception control unit 22 selects the effective artificial satellites 12E in which a reception sensitivity variation is equal to or larger than a threshold (Step S112). Then, the satellite reception control unit 22 selects the artificial satellite 12 to be used for calculation of position information from the effective artificial satellites 12E (Step S113).

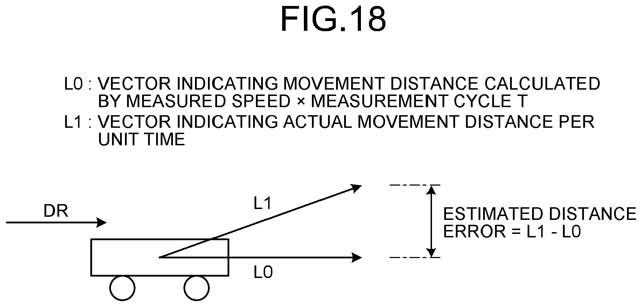

FIG. 18 is a conceptual view illustrating an estimated distance error in the satellite reception control. As illustrated in FIG. 18, a vector L0 is a vector indicating a movement distance of a railroad vehicle obtained by multiplying a measured speed by a measurement cycle T. On the other hand, a vector L1 is a vector indicating an actual movement distance of the railroad vehicle 11 per unit time. An absolute value of a difference between the vector L1 and the vector L0 is called the estimated distance error. The switching determination unit 26 calculates the vector L0, the vector L1, and the estimated distance error.

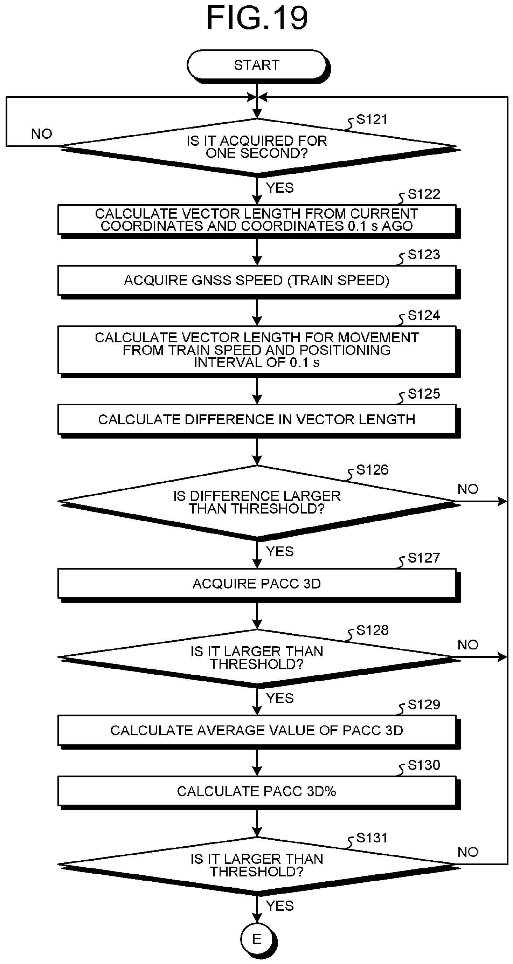

FIG. 19 is a flowchart (Part 1) illustrating a processing flow of the satellite reception control. The state determination unit 24 determines whether the positioning signal calculation unit 21 has acquired the radio wave signal SX, for example, for one second (Step S121). In response to determining that the radio wave signal SX for one second has not been acquired (No in Step S121), the processing is repeated. In response to determining that the radio wave signal SX for one second has been acquired (Yes in Step S121), a vector length is calculated from current coordinates and coordinates 0.1 seconds ago (Step S122).

Next, the satellite reception control unit 22 acquires the speed of the railroad vehicle 11 from the satellite positioning data group DG (Step S123). Then, the satellite reception control unit 22 calculates a vector length corresponding to the movement distance of the railroad vehicle 11 from the speed of the railroad vehicle 11 and a measurement interval (for example, 0.1 seconds) (Step S124), and calculates a difference between the two vectors (Step S125). The difference between the vectors corresponds to the estimated distance error.

The state determination unit 24 determines whether the estimated distance error is larger than a predetermined threshold (Step S126). That is, the state determination unit 24 determines, by using the estimated distance error, which of the satellite reception control and the independent measurement control is to be performed. If the estimated distance error is not larger than the threshold (No in Step S126), the processing is repeated returning to Step S121. If the estimated distance error is larger than the threshold (Yes in Step S126), the satellite reception control unit 22 acquires an estimated position error (Step S127).

The state determination unit 24 determines whether the estimated position error is larger than a predetermined threshold (Step S128). Specifically, the state determination unit 24 calculates the estimated position error related to the measurement precision of the position of the vehicle in the three-axis direction, and determines, on the basis of the estimated position error, which of the satellite reception control and the independent measurement control is to be performed. If the estimated position error is not larger than the threshold (No in Step S128), the processing is repeated returning to Step S121. If the estimated position error is larger than the threshold (Yes in Step S128), the satellite reception control unit 22 acquires an average value of the estimated position errors (Step S129).

The satellite reception control unit 22 then calculates a change rate in the estimated position error using the average value of the estimated position errors (Step S130). Subsequently, the state determination unit 24 determines whether the average value of the estimated position errors is larger than a predetermined threshold (Step S131). Specifically, the state determination unit 24 calculates a change amount of the estimated position error, and determines, on the basis of the change amount, which of the satellite reception control and the independent measurement control should be performed. If the change amount is not larger than the threshold (No in Step S131), the processing is repeated returning to Step S121. If the change amount is larger than the threshold (Yes in Step S131), the processing proceeds to E in FIG. 10, and the switching determination unit 24 continues the processing.

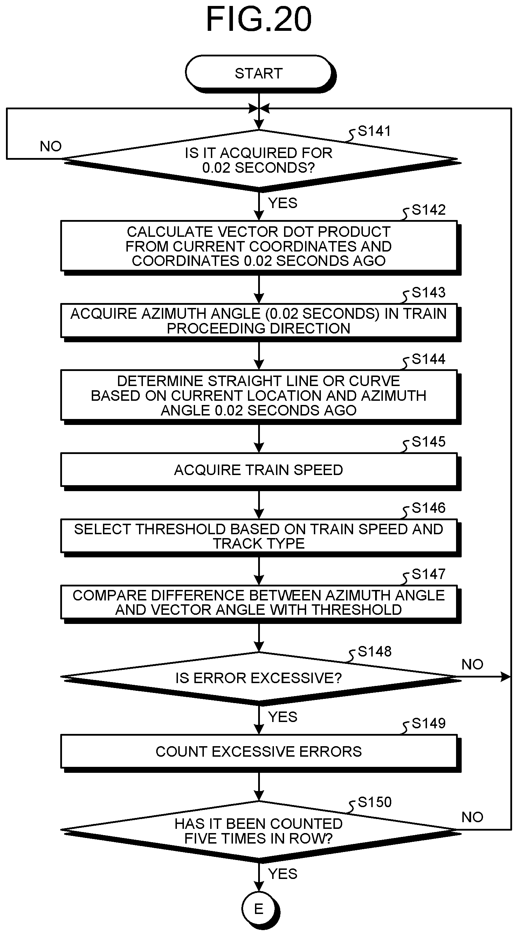

FIG. 20 is a flowchart (Part 2) illustrating the processing flow of illustrating satellite reception control. The state determination unit 24 determines, for example, whether the positioning signal calculation unit 21 has acquired the radio wave signal SX for 0.02 seconds (Step S141). In response to determining that the radio wave signal SX for 0.02 seconds has not been acquired (No in Step S141), the processing is repeated. In response to determining that the radio wave signal SX for 0.02 seconds has been acquired (Yes in Step S141), the satellite reception control unit 22 calculates a vector dot product from the current coordinates and the coordinates 0.02 seconds ago (Step S142).

Next, the satellite reception control unit 22 acquires an azimuth angle of the proceeding direction DR of the railroad vehicle 11 (Step S143). Then, the satellite reception control unit 22 calculates a type (a straight line, a curve, or the like) of a track on which the railroad vehicle 11 is currently traveling from a current azimuth angle and an azimuth angle 0.02 seconds ago (Step S144), and calculates a speed of the railroad vehicle 11 on the basis of the result (Step S145). Subsequently, the satellite reception control unit 22 selects a predetermined threshold stored in the storage device 27 on the basis of the speed of the railroad vehicle 11 and the type of the track (Step S146). Then, a difference between the azimuth angle of the proceeding direction DR of the railroad vehicle 11 and the vector dot product is compared with the predetermined threshold (Step S147).

The state determination unit 24 determines whether the difference between the both is extremely large, on the basis of the predetermined threshold (Step S148). In response to determining that the difference between the both is not extremely large (No in Step S148), the processing is repeated returning to Step S141. In response to determining that the difference between the both is extremely large (Yes in Step S148), the satellite reception control unit 22 counts such results (Step S149).

The state determination unit 24 then determines whether it has been determined that the error is extremely large, for example, five times in a row (Step S150). If it has not been determined that the difference between the both is extremely large five times in a row (Step S150), the processing is repeated returning to Step S141. If it has been determined that the difference between the both is extremely large five times in a row (Yes in Step S150), the processing proceeds to E in FIG. 10, and the switching determination unit 26 continues the processing.

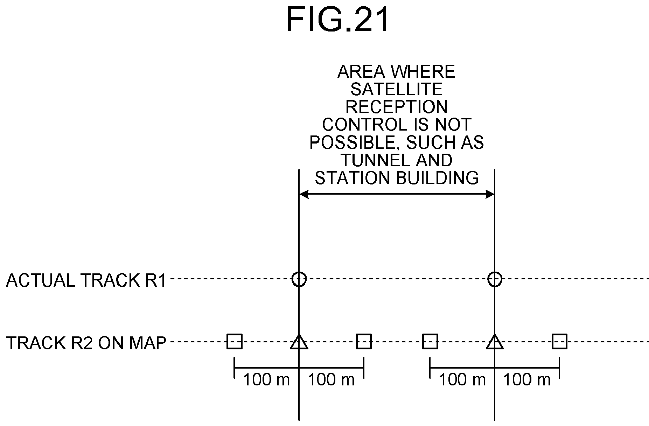

FIG. 21 is an explanatory view illustrating an execution situation of the map interlocking control. In FIG. 21, an actual track R1 and a track R2 on a map are provided. Then, a space between two marks "O" illustrated above the actual track R1 and a space between two marks "△" illustrated above the track R2 on the map represent areas where the satellite reception control is not possible such as a tunnel and a station building. The two marks "△" are stored in the map DB 29. On the track R2 on the map, marks "□" are located 100 m before and after each of the two marks "△". The two marks "□" are also stored in the map DB 29. That is, the map DB 29 stores the map information including a passage area through which the vehicle passes and a specific position.

For example, if it has been measured that the railroad vehicle 11 is traveling at points 100 m before and after the mark "O" on the actual track R1, the satellite reception control unit 22 determines that the railroad vehicle is traveling at corresponding positions of the marks "□" on the map.

The switching determination unit 26 determines which of the satellite reception control and the independent measurement control is to be performed. This determination is executed on the basis of a traveling state (a travel speed, an acceleration, or the like) of the railroad vehicle 11, the positions of the marks "△" and the marks "□" in the map DB 29, the passage area (whether the satellite reception control is possible in the area), and the like. Then, the map interlocking control is performed on the basis of the determination result of the switching determination unit 26 in which the satellite reception control unit 22 performs the satellite reception control, and the independent measurement calculation unit 23 performs the independent measurement control, respectively or simultaneously.

The positioning device 10 of the embodiment described above includes the satellite reception control unit 22, the independent measurement calculation unit 23, and the switching determination unit 26. The satellite reception control unit 22 performs the satellite reception control related to reception of the information transmitted from the artificial satellite 12 for measurement of the position of the railroad vehicle 11. The independent measurement calculation unit 23 performs the independent measurement control related to reception of the information transmitted from the sensor for measurement of the position of the railroad vehicle 11. The switching determination unit 26 determines, on the basis of the reception situation of the above information, which of the satellite reception control and the independent measurement control is to be performed. As a result, for example, the positioning device 10 can switch from the satellite reception control to the independent measurement control during traveling of the railroad vehicle 11, or can simultaneously execute the satellite reception control and the independent measurement control, and thus, can solve a problem such as multipath. Moreover, it is possible to improve the measurement precision of the traveling position of the railroad vehicle 11 in underpasses and underground sections, such as tunnels and station buildings on bridges.

The satellite reception control unit 22 sets the range of the elevation angle of the artificial satellite 12 with respect to the railroad vehicle 11. The satellite reception control unit 22 sets the range of the azimuth angle formed by the artificial satellite 12 with respect to the railroad vehicle 11 within the set elevation angle range. Then, the satellite reception control unit 22 divides, into division areas, each area included in the elevation angle range and the azimuth angle range, and selects the artificial satellite 12 to be used for the satellite reception control from the one or more artificial satellites 12 arranged in the division areas. As a result, the satellite reception control unit 22 can select any artificial satellite 12 in accordance with the elevation angle, the azimuth angle, and the reception situation of the radio wave signal SX, and thus, can further improve the measurement precision of the position of the railroad vehicle 11. Moreover, when the artificial satellites 12 exist in the same area, the artificial satellites 12 are selected such that one or two of the artificial satellites 12 exist in this area, so that a bias in the arrangement of the artificial satellites 12 in the area can be adjusted, and the artificial satellites 12 can be evenly arranged.

The satellite reception control unit 22 sets the range of the elevation angle of the artificial satellite 12 with respect to the railroad vehicle 11, sets the range of the azimuth angle formed by the artificial satellite 12 with respect to the railroad vehicle 11 within the set elevation angle range, divides, into division areas, each area included in the elevation angle range and the azimuth angle range, and selects the division areas on the basis of a predetermined order of priority. As a result, the satellite reception control unit 22 can select the artificial satellite 12 having a good reception situation of the radio wave signal SX and a high priority, and can further improve the measurement precision of the position of the railroad vehicle 11.

The state determination unit 24 calculates the vector L0, the vector L1, and the estimated distance error. The vector L0 corresponds to the movement amount of the railroad vehicle 11 within a predetermined time on the basis of the speed of the railroad vehicle 11. The vector L1 corresponds to the movement amount of the railroad vehicle 11 within a predetermined time. The estimated distance error is based on the vector L0 and the vector L1. The state determination unit 24 determines, by using the estimated distance error, which of the satellite reception control and the independent measurement control is to be performed. Moreover, the state determination unit 24 calculates the estimated position error related to the measurement precision of the position of the railroad vehicle 11 in the three-axis direction, and determines, on the basis of the estimated position error, which of the satellite reception control and the independent measurement control is to be performed. Moreover, the state determination unit 24 calculates a change amount of the estimated position error, and determines, on the basis of the change amount, which of the satellite reception control and the independent measurement control is to be performed. As a result, the state determination unit 24 can obtain more determination indexes for switching between the satellite reception control and the independent measurement control. For example, the switching determination unit 26 more finely switches the satellite reception control and the independent measurement control.

The positioning device 10 also includes the map DB 29 that stores the map information including the passage area through which the railroad vehicle 11 passes and the specific position (information on the track R2 on the map, a tunnel, an underpass, or the like, entrance and exit points thereof, predetermined points before and after each of the entrance and exit, and the like). The switching determination unit 26 determines which of the satellite reception control and the independent measurement control is to be performed. This determination is executed on the basis of the state of the railroad vehicle 11, the passage area, and the specific position. As a result, the switching determination unit 26 starts to determine whether to switch from the satellite reception control to the independent measurement control from a predetermined point before the railroad vehicle 11 enters an area where the reception situation of the radio wave signal SX is poor, such as a tunnel and an underpass, and thus, it is possible to optimize the timing for switching. Moreover, the switching determination unit 26 can eliminate a time lag associated with the switching by referring to the map DB 29, and can improve the measurement precision of the railroad vehicle 11 in the satellite reception control unit 22 and the independent measurement calculation unit 23.

The state determination unit 24 determines whether the railroad vehicle 11 is in the stopped state or in the traveling state. As a result, the state determination unit 24 prevents a measurement result of the position of the railroad vehicle 11 from swinging in the stopped state of the railroad vehicle 11.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. A positioning device (10) for measuring a position of a vehicle (11), the positioning device comprising:

   a satellite reception control unit (22) configured to perform first control related to reception of first information transmitted from one or more artificial satellites (12), the first information being used for measurement of the position of the vehicle;
   an independent measurement control unit (23) configured to perform second control related to reception of second information transmitted from a sensor unit (CSU), the second information being used for measurement of the position of the vehicle; and
   a switching determination unit (26) configured to determine which of the first control and the second control is to be performed, the determination being executed on the basis of reception situations of the first information and the second information.

2. The positioning device according to claim 1, wherein the satellite reception control unit (22) is configured to

   set a range of an elevation angle of each of the artificial satellites (12) with respect to the vehicle (11),
   set a range of an azimuth angle of each of the artificial satellites (12) with respect to the vehicle within the range of the elevation angle,
   divide, into division areas, each area included in the range of the elevation angle and the range of the azimuth angle, and
   select the artificial satellite to be used for the first control from among the artificial satellites (12) arranged in the division areas.

3. The positioning device according to claim 1, wherein the satellite reception control unit (22) is configured to

   set a range of an elevation angle of each of the artificial satellites (12) with respect to the vehicle (11),
   set a range of an azimuth angle of each of the artificial satellites (12) with respect to the vehicle within the range of the elevation angle,
   divide, into division areas, each area included in the range of the elevation angle and the range of the azimuth angle, and
   select the division areas on the basis of a predetermined order of priority.

4. The positioning device according to any one of claims 1 to 3, wherein the switching determination unit (26) is configured to

   calculate a first vector, a second vector, and an estimated distance error based on the first vector and the second vector, the first vector corresponding to a movement amount of the vehicle within a predetermined time, the second vector corresponding to a movement amount of the vehicle within a predetermined time based on a speed of the vehicle, and
   determine, by using the estimated distance error, which of the first control and the second control is to be performed.

5. The positioning device according to any one of claims 1 to 4, wherein the switching determination unit (26) is configured to

   calculate an estimated position error related to measurement precision of the position of the vehicle in a three-axis direction, and
   determine, by using the estimated position error, which of the first control and the second control is to be performed.

**6.** The positioning device according to any one of claims 1 to 5, wherein the switching determination unit (26) is configured to

calculate a change amount of the estimated position error, and
determine, by using the change amount, which of the first control and the second control is to be performed.

**7.** The positioning device according to any one of claims 1 to 6, further comprising a map information storage unit (29) configured to store map information including a passage area through which the vehicle passes and a specific position,
wherein the switching determination unit (26) is configured to determine which of the first control and the second control is to be performed, on the basis of a state of the vehicle, the passage area, and the specific position.

**8.** The positioning device according to any one of claims 1 to 7, wherein the switching determination unit (26) is configured to determine whether the vehicle (11) is in a stopped state or in a traveling state.

**9.** A positioning method for measuring a position of a vehicle, the positioning method comprising:

determining (S81; S83) which of first control and second control is to be performed, the determining being executed on the basis of reception situations of first information transmitted from one or more artificial satellites and second information transmitted from a sensor unit, the first information and the second information each being used for measurement of the position of the vehicle, the first control being related to reception of the first information, the second control being related to reception of the second information;
starting or continuing (S82) the first control in response to determining that the first control is to be performed; and
starting or continuing (S84) the second control in response to determining that the second control is to be performed.

# FIG.1

12-1

12-2

12-3

12-4

SX1

SX2

SX3

SX4

10

DR

(RAILROAD VEHICLE PROCEEDING DIRECTION)

11

14

15

13

EXTERNAL DEVICE

RECEPTION OPERATION PROCESSING DEVICE

# FIG.2

RECEIVING ANTENNA DEVICE 13

RECEPTION OPERATION PROCESSING DEVICE 15

POSITIONING SIGNAL CALCULATION UNIT 21

DG

SATELLITE RECEPTION CONTROL UNIT 22

STATE DETERMINATION UNIT 24

VEHICLE POSITION CORRECTION UNIT 25

SWITCHING DETERMINATION UNIT 26

INDEPENDENT MEASUREMENT CALCULATION UNIT 23

DS

MAP DB 29

STORAGE DEVICE 27

COMMUNICATION CONNECTION DEVICE 28

EXTERNAL DEVICE 14

THREE-AXIS SENSOR UNIT CSU

EP 4 060 364 A1

# FIG.3

```
        ┌─────────────┐
        │    START    │
        └─────────────┘
               │
               ▼              ⌐S11
   ┌───────────────────────────┐
   │      RECEIVE SIGNAL       │
   └───────────────────────────┘
               │
               ▼              ⌐S12
   ┌───────────────────────────┐
   │     ACQUIRE TIME DATA     │
   └───────────────────────────┘
               │
               ▼              ⌐S13
   ┌───────────────────────────┐
   │ ACQUIRE POSITION INFORMATION DATA │
   └───────────────────────────┘
               │
               ▼              ⌐S14
   ┌───────────────────────────┐
   │ ACQUIRE POSITIONING SATELLITE DATA │
   └───────────────────────────┘
               │
               ▼              ⌐S15
   ┌───────────────────────────┐
   │ ACQUIRE ANOTHER POSITIONING DATA │
   └───────────────────────────┘
               │
               ▼
        ┌─────────────┐
        │     END     │
        └─────────────┘
```

# FIG.4

```
        ┌─────────────┐
        │    START    │
        └─────────────┘
               │                                  ┌──────┐
               ▼              ⌐S21                │
   ┌───────────────────────────┐                 │
   │  ACQUIRE ACCELERATION DATA │                 │
   └───────────────────────────┘                 │
               │                                  │
               ▼              ⌐S22                │
   ┌───────────────────────────┐                 │
   │     ACQUIRE GYRO DATA     │                 │
   └───────────────────────────┘                 │
               │                                  │
               ▼              ⌐S23                │
   ┌───────────────────────────┐                 │
   │  ACQUIRE GEOMAGNETIC DATA │                 │
   └───────────────────────────┘                 │
               │                                  │
               ▼              ⌐S24                │
           ╱─────────╲                   NO       │
          ╱ IS IT ACQUIRED ╲─────────────────────┘
          ╲ FOR 0.1 SECONDS? ╱
           ╲─────────╱
               │ YES
               ▼              ⌐S25
   ┌───────────────────────────┐
   │ CALCULATE AVERAGE OF SENSOR DATA │
   │        (0.1 SECONDS)      │
   └───────────────────────────┘
               │
               ▼
        ┌─────────────┐
        │     END     │
        └─────────────┘
```

# FIG.5

RAILROAD VEHICLE
11

DR

CENTER LINE
OF TRACK

TRACK

O : POINT WHERE POSITION CAN BE MEASURED ONLY
    BY INDEPENDENT MEASUREMENT CONTROL
× : POINT WHERE SATELLITE RECEPTION CONTROL IS
    REQUIRED

EP 4 060 364 A1

# FIG.6

START

S31 — HAS SPEED BEEN CALCULATED?

YES →

NO ↓

S32 — DETERMINE THAT SATELLITE RECEPTION IS NOT POSSIBLE

S33 — IS SPEED LOWER THAN THRESHOLD?

NO →

YES ↓ S34 — STOP DETERMINATION

S35 — TRAVEL DETERMINATION

S36 — HAS ACCELERATION BEEN CALCULATED?

YES →

NO ↓

S37 — DETERMINE THAT SENSOR IS NOT AVAILABLE

S38 — IS IT LOWER THAN THRESHOLD?

NO →

YES ↓ S39 — STOP DETERMINATION

S40 — TRAVEL DETERMINATION

S41 — HAS ANGLE BEEN CALCULATED?

YES →

NO ↓

S42 — DETERMINE THAT SENSOR IS NOT AVAILABLE

S43 — IS ANGLE SMALLER THAN THRESHOLD?

NO →

YES ↓ S44 — STOP DETERMINATION

S45 — TRAVEL DETERMINATION

A

# FIG.7

A

S51
HAS AT LEAST ONE OF SPEED, ACCELERATION, AND ANGLE BEEN CALCULATED? — NO

YES

S52
FAULT DETERMINATION

END

S53
HAS STOP DETERMINATION BEEN MADE IN AT LEAST ONE STEP? — NO

YES S54
STOP DETERMINATION

S55
ACQUIRE POSITION BEFORE LAPSE OF 100 ms

S56
DATA OUTPUT PROCESSING

END

S57
TRAVEL DETERMINATION

B    C

# FIG.8

B

S61
HAS PDOP BEEN CALCULATED? — YES

NO

S62
OUTPUT RESET VALUE

S63
IS IT WITHIN RANGE BETWEEN MAXIMUM OR MINIMUM? — NO

YES S64
OUTPUT RESET VALUE

S65
IS IT LARGER THAN MAXIMUM VALUE? — NO

S66
OUTPUT MINIMUM VALUE

YES

S67
CALCULATION OF ELEVATION ANGLE

S68
OUTPUT OF ELEVATION ANGLE

END

# FIG.9

C

S71

HAS PACC 3D BEEN
CALCULATED? — YES

NO

S72

OUTPUT RESET VALUE

S73

IS IT WITHIN RANGE
BETWEEN MAXIMUM
OR MINIMUM? — YES

NO

S74

OUTPUT RESET VALUE

S75

IS IT LARGER THAN
MAXIMUM VALUE?

NO

S76

OUTPUT MINIMUM VALUE

YES

S77

CALCULATION OF RECEPTION
SENSITIVITY

S78

OUTPUT OF RECEPTION
SENSITIVITY

END

# FIG.10

START

S81
IS SATELLITE RECEPTION CONTROL TO BE STARTED OR CONTINUED?

E

NO

YES

S82
START OR CONTINUE SATELLITE RECEPTION CONTROL

D

S83
IS INDEPENDENT MEASUREMENT CONTROL TO BE STARTED OR CONTINUED?

NO

F

YES

S84
START OR CONTINUE INDEPENDENT MEASUREMENT CONTROL

S85
IS SATELLITE RECEPTION CONTROL TO BE ENDED?

NO

YES

S86
END OF SATELLITE RECEPTION CONTROL

S87
IS INDEPENDENT MEASUREMENT CONTROL TO BE ENDED?

NO

YES

S88
END OF INDEPENDENT MEASUREMENT CONTROL

END

# FIG.11A

DR

13

$$\left(\begin{array}{c} \text{TYPICAL} \\ \text{OMNIDIRECTIONAL} \\ \text{RECEPTION} \\ \text{SITUATION} \\ (360°) \end{array}\right)$$

# FIG.11B

DR

AE

AN        AN

$$\left(\begin{array}{c} \text{EXAMPLE OF} \\ \text{SETTING} \\ \text{RECEPTION AREA} \\ \text{AE} \\ (270°) \end{array}\right)$$

# FIG.11C

DR

AD

AE

AN        AN

$$\left(\begin{array}{c} \text{SITUATION WHERE} \\ \text{SATELLITE ARRANGEMENT} \\ \text{IS DETERMINED FOR} \\ \text{RECEPTION AREA AE AND} \\ \text{RECEPTION AREA AE IS} \\ \text{SPECIFIED} \end{array}\right)$$

# FIG.12A

[ZENITH]

12E

12E

12E

12E

12E

12E

12N

12N

12N

12N

[HORIZON]

EL

13

DR

# FIG.12B

[HORIZON (0°)]

12E

DR

12E

12N

12N

[ZENITH (90°)]

12E

12E

12N

12E

AEL

# FIG.13

AREA e

○ : EFFECTIVE ARTIFICIAL SATELLITE 12E

□ : ARTIFICIAL SATELLITE 12L NOT USED
FOR POSITION MEASUREMENT

☆ : IN-EFFECTIVE ARTIFICIAL SATELLITE 12N

# FIG.14

# FIG.15

```
                    ┌─────────────┐
                    │    START    │
                    └──────┬──────┘
                           │           ┌ S91
                    ┌──────▼───────────┐
                    │ ACQUIRE NUMBER OF│
                    │SATELLITES USED FOR CURRENT│
                    │   POSITIONING    │
                    └──────┬───────────┘
                           │           ┌ S92
                     ◇─────▼─────◇
                    IS NUMBER OF
                 SATISFIED CONDITIONS ──── YES ────┐
                 EQUAL TO OR LARGER               │
                   THAN THRESHOLD?                │
                     ◇─────┬─────◇                │
                           │ NO                   │
                           │       ┌ S93          │         ┌ S94
                     ◇─────▼─────◇                │   ◇─────▼─────◇
                    IS SATELLITE                  │    IS IT EQUAL
                 RECEPTION CONTROL ── NO ──┐      │  TO OR LARGER THAN ── NO ──┐
                 PERFORMED BEFORE          │      │ THRESHOLD TWICE IN         │
                   LAPSE OF                │      │      ROW?                  │
                    100 ms?                │      │                           │
                     ◇─────┬─────◇         │   ◇─────┬─────◇                  │
                        YES│               │      YES│                        │
                     ┌─────▼───┐      ┌────▼──┐  ┌───▼───┐               ┌────▼──┐
                     │    D    │      │   E   │  │   F   │               │   D   │
                     └─────────┘      └───────┘  └───────┘               └───────┘
```

# FIG.16

# FIG.17

START

ACQUIRE ELEVATION ANGLE CONTROL VALUE
AND RECEPTION SENSITIVITY CONTROL VALUE — S101

ACQUIRE DIRECTION, ELEVATION ANGLE,
AND RECEPTION SENSITIVITY OF EACH SATELLITE — S102

COUNT NUMBER OF SATELLITES IN AREA
(24 DIVISIONS) — S103

COUNT NUMBER OF SATELLITES WITH
RECEPTION SENSITIVITY EQUAL TO OR HIGHER
THAN THRESHOLD IN AREA — S104

IS THERE ECCENTRICITY? — S105
NO
YES

ACQUIRE RECEPTION SENSITIVITIES OF
ALL SATELLITES — S106

ACQUIRE NUMBER OF SATELLITES EQUAL TO OR
LARGER THAN THRESHOLD OF NUMBER OF SATELLITES
FOR EACH ELEVATION ANGLE — S107

ACQUIRE ELEVATION ANGLE OF SATELLITE
WITH RECEPTION SENSITIVITY EQUAL TO OR HIGHER
THAN THRESHOLD — S108

ACQUIRE MINIMUM ELEVATION ANGLE
FROM ACQUIRED ELEVATION ANGLES — S109

SET ELEVATION ANGLE CONTROL VALUE
(VALUE CALCULATED ABOVE) — S110

SET LIMIT OF ONE SATELLITE IN ORDER OF
RECEPTION SENSITIVITY IF THERE ARE TWO OR MORE
SATELLITES IN AREA — S111

SET LIMIT OF EFFECTIVE SATELLITE
IF RECEPTION SENSITIVITY VARIATIONS (TEN TIMES)
ARE EQUAL TO OR LARGER THAN THRESHOLD — S112

SELECT SATELLITE — S113

END

# FIG.18

L0 : VECTOR INDICATING MOVEMENT DISTANCE CALCULATED
    BY MEASURED SPEED × MEASUREMENT CYCLE T
L1 : VECTOR INDICATING ACTUAL MOVEMENT DISTANCE PER
    UNIT TIME

DR

L1

L0

ESTIMATED DISTANCE
ERROR = L1 - L0

# FIG.19

START

S121
IS IT ACQUIRED FOR
ONE SECOND? —— NO

YES

CALCULATE VECTOR LENGTH FROM CURRENT
COORDINATES AND COORDINATES 0.1 s AGO S122

ACQUIRE GNSS SPEED (TRAIN SPEED) S123

CALCULATE VECTOR LENGTH FOR MOVEMENT
FROM TRAIN SPEED AND POSITIONING
INTERVAL OF 0.1 s S124

CALCULATE DIFFERENCE IN VECTOR LENGTH S125

S126
IS DIFFERENCE LARGER
THAN THRESHOLD? —— NO

YES

ACQUIRE PACC 3D S127

S128
IS IT LARGER THAN
THRESHOLD? —— NO

YES

CALCULATE AVERAGE VALUE OF PACC 3D S129

CALCULATE PACC 3D% S130

S131
IS IT LARGER THAN
THRESHOLD? —— NO

YES

E

# FIG.20

START

S141
IS IT ACQUIRED FOR
0.02 SECONDS?

NO

YES

S142
CALCULATE VECTOR DOT PRODUCT
FROM CURRENT COORDINATES AND
COORDINATES 0.02 SECONDS AGO

S143
ACQUIRE AZIMUTH ANGLE (0.02 SECONDS) IN TRAIN
PROCEEDING DIRECTION

S144
DETERMINE STRAIGHT LINE OR CURVE
BASED ON CURRENT LOCATION AND AZIMUTH
ANGLE 0.02 SECONDS AGO

S145
ACQUIRE TRAIN SPEED

S146
SELECT THRESHOLD BASED ON TRAIN SPEED AND
TRACK TYPE

S147
COMPARE DIFFERENCE BETWEEN AZIMUTH ANGLE
AND VECTOR ANGLE WITH THRESHOLD

S148
IS ERROR EXCESSIVE?

NO

YES

S149
COUNT EXCESSIVE ERRORS

S150
HAS IT BEEN COUNTED
FIVE TIMES IN ROW?

NO

YES

E

# FIG.21

AREA WHERE
SATELLITE
RECEPTION
CONTROL IS NOT
POSSIBLE, SUCH AS
TUNNEL AND
STATION BUILDING

ACTUAL TRACK R1

TRACK R2 ON MAP

100 m | 100 m          100 m | 100 m

Europäisches
Patentamt

European
Patent Office

Office européen
des brevets

# EUROPEAN SEARCH REPORT

Application Number

EP 22 15 2916

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2019 004821 A1 (DAIMLER AG [DE]) 23 January 2020 (2020-01-23) | 1,7-9 | INV. G01S5/00 G01S19/28 G01S19/39 G01S19/48 |
| A | * paragraphs [0024] - [0029], [0034] - [0046]; claims 1-5; figures 1-5 * | 2-6 | |
| X | WO 2019/244683 A1 (TOSHIBA KK [JP]; TOSHIBA INFRASTRUCTURE SYSTEMS & SOLUTIONS CORP [JP]) 26 December 2019 (2019-12-26) | 1,7-9 | |
| A | * paragraphs [0008] - [0025]; claims 1-4; figures 1-3 * * paragraphs [0060] - [0062]; figure 12 * | 2-6 | |

TECHNICAL FIELDS SEARCHED (IPC)

G01S

The present search report has been drawn up for all claims

| Place of search | Date of completion of the search | Examiner |
|---|---|---|
| Munich | 29 June 2022 | Ciccarese, Corrado |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

  ..........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 15 2916

This annex lists the patent family members relating to the patent documents cited in  the above-mentioned European search report.
The members are as contained in the European Patent Office EDP file on
The European Patent Office is in no way liable for these particulars which are merely given for the purpose of information.

29-06-2022

| Patent document cited in search report | Publication date | Patent family member(s) | Publication date |
|---|---|---|---|
| DE 102019004821 A1 | 23-01-2020 | NONE | |
| WO 2019244683 A1 | 26-12-2019 | CN 112313109 A | 02-02-2021 |
| | | EP 3812193 A1 | 28-04-2021 |
| | | JP 2019221081 A | 26-12-2019 |
| | | SG 11202012315X A | 28-01-2021 |
| | | WO 2019244683 A1 | 26-12-2019 |

EPO FORM P0459

For more details about this annex : see Official Journal of the European Patent Office, No. 12/82